# EUROPEAN PATENT APPLICATION

(11) **EP 1 280 300 A2**
(43) Date of publication of application: **29.01.2003**
(21) Application number: 02255217.8
(22) Date of filing: 26.07.2002
(51) Int. Cl.: H04L 12/46, H04L 29/06

(54) **Method of establishing a secure data connection**

(30) Priority: 27.07.2001 GB 0118437
(71) Applicant: Hewlett-Packard Company, A Delaware Corporation, Palo Alto, CA 94304 (US)
(72) Inventor: Wray, Michael John, Bath BA1 3NE (GB)
(74) Representative: Lawrence, Richard Anthony

(57) **Abstract**

In a method of establishing a secure data connection, a corporate computer network comprises a LAN to which is connected a first, second and third client computer. At the boundary of the corporate computer network is a firewall computer (hereinafter simply referred to as 'the firewall'). The firewall is configured to prevent incoming data connections being made to the LAN from outside of the corporate computer network. As well as preventing incoming communications with the LAN, the firewall is also configured to control connections requested from within the corporate computer network to external computers. Indeed, for security purposes, the firewall is configured to require authentication of such requests for an external connection (i.e. to verify who is actually making the request) prior to establishing the external connection. This authentication is performed using the SSL protocol. In this case, the Java Secure Sockets Extension (JSSE) version of SSL is used. Multiple SSL sessions are used, firstly to obtain the necessary authentication of the relevant client computer to the firewall, and then to obtain a secure connection between the client computer and a destination computer. These multiple SSL sessions are set-up in a nested manner, the general method being applicable to situations where a larger number of SSL sessions are required.

## Description

This invention relates to a method of establishing a secure data connection between computing devices. More particularly, the invention relates to a method of establishing a secure data connection between computing devices using a secure data transfer protocol, such as the Secure Sockets Layer (SSL) protocol.

The recent increase in the use of publicly accessible computer networks, such as the Internet, for information exchange has resulted in an increased need for secure data connections across such networks. This is particularly evident given that there has recently been a large increase in E-commerce facilities on the Internet. Such facilities generally enable confidential business information, financial information, and even payment requests, to be sent over publicly accessible computer networks. In the context of this invention, the term 'secure data connection' or 'secure data transfer session' is intended to mean a data path or connection which has been configured to transfer data using some secure data transfer protocol.

The SSL protocol (sometimes called the Transport Level Security (TLS) protocol) is an industry standard method by which secure data connections or sessions can be established. The SSL protocol provides data encryption, server authentication, message integrity and optional client authentication over computer networks. SSL is a so-called transport layer protocol since it is defined to operate on the 'sockets' level of a computer network. It will be understood by those skilled in the art that 'sockets' is the standard application program interface (API) by which data is transferred on the transport level of a computer network. As a result of SSL operating on the sockets level of a network, there must be an end-to-end direct connection between networked devices in order for SSL to function correctly.

Secure data transfer sessions are generally established between the user's computer and the ultimate destination computer, e.g. an online banking organisations server, or some other E-commerce server. No account is made of intervening devices on the network.

According to a first aspect of the present invention, there is provided a method of establishing a secure data connection between a first computer and a second computer over a computer network, the computer network including a third computer interconnecting the first and second computers, the method comprising: establishing a first data connection between the first computer and the third computer; establishing, over the first data connection, a first secure data transfer session between the first computer and the third computer; in response to a request sent over the first secure data transfer session, establishing a second data connection between the third computer and the second computer; and establishing, by means of the first and second data connections, a second secure data transfer session between the first computer and the second computer.

The method provides a means in which a secure data transfer session may be set up with a destination computer (in this case the second computer) even though an intermediate device (the third computer) itself requires data transfer over a secure data transfer session. In this sense, some computer networks employ relay devices, sometimes referred to as 'firewalls' or 'proxies', which control the transfer of data into, and out of, private networks. In certain circumstances it may be desirable to make such relays 'secure' so that any request the relay receives for making an onward connection to some other computer has itself to be sent using a secure data transfer session. The method caters for such a circumstance by means of 'nesting' secure data transfer sessions. The method is by no means limited to establishing two secure data transfer sessions, and, in theory, an unlimited number of sessions can be nested.

Preferably, the third computer is a relay. After the first data connection is established, the relay computer can send a prompt message to the first computer requesting that a secure data transfer session be established.

The step of establishing the second data connection between the relay and the second computer may be performed by means of the first computer sending a request message to the relay over the first secure data transfer session, the request message specifying the location or address of the second computer.

Prior to the step of establishing the second data connection between the relay and the second computer, the relay may perform a security check to determine whether the second computer can be accessed, the second data connection only being established if the check is successful.

The first and second secure data transfer sessions are preferably established using the SSL protocol, or a variant thereof.

The second secure data transfer session between the first computer and the second computer may be layered over the first secure data transfer session. The second secure data transfer session between the first computer and the second computer may use the first secure data transfer session as its transport layer.

According to a second aspect of the present invention, there is provided a method of establishing a secure data connection between a first computer and a second computer over a computer network, the computer network including a third computer, the method comprising: establishing a first data connection between the first computer and the third computer; establishing, over the first data connection, a first secure data transfer session between the first computer and the third computer; transferring an access request to the third computer over the first secure data transfer session, the access request including an address corresponding to the second computer; establishing a second data connection between the third computer and the second computer using the address supplied from the first computer; and establishing, by means of the first and second data connections, a second secure data transfer session between the first computer and the second computer.

According to a third aspect of the present invention, there is provided a method of establishing a secure data connection between a first computer and a second computer over a computer network, the computer network including a third computer, wherein the second computer is accessible by means of an address which is initially unknown to the third computer, the method comprising: establishing a first data connection between the first computer and the third computer; establishing, over the first data connection, a first secure data transfer session between the first computer and the third computer; establishing a second data connection between the third computer and the second computer in response to receiving an access request from the first computer over the first secure data transfer session, the access request including the address of the second computer; and establishing, by means of the first and second data connections, a second secure data transfer session between the first computer and the second computer, the second secure data transfer session using the first secure data transfer session as its transport layer.

According to a fourth aspect of the present invention, there is provided a method of establishing a secure data connection between a first computer and a second computer over a computer network, the computer network including a firewall, wherein the second computer is accessible by means of an address which is initially unknown to the firewall, the method comprising: establishing a first data connection between the first computer and the firewall; establishing, over the first data connection, a first secure data transfer session between the first computer and the firewall; establishing a second data connection between the firewall and the second computer in response to receiving an access request from the first computer over the first secure data transfer session, the access request including the address of the second computer; and establishing, by means of the first and second data connections, a second secure data transfer session between the first computer and the second computer.

According to a fifth aspect of the present invention, there is provided a computer program stored on computer usable medium comprising computer-readable instructions for causing a host computer to perform the steps of: establishing a first data connection between the host computer and a first remote computer; establishing, over the first data connection, a first secure data transfer session between the host computer and the first remote computer; in response to a request sent over the first secure data transfer session, causing the first remote computer to establish a second data connection between the first remote computer and a second remote computer; and establishing, by means of the first and second data connections, a second secure data transfer session between the host computer and the second remote computer.

In this sense, the term 'remote computer' is intended to mean a computer which is physically separated from the host computer by means of a network link, for example, an Internet connection.

According to a sixth aspect of the present invention, there is provided a computer network comprising: at least one client computer; and a relay for controlling data flow between the or each client computer and an external computer network, wherein the or each client computer is configured to: establish a first data connection with the relay; establish, over the first data connection, a first secure data transfer session between the client computer and the relay; establish a second data connection between the relay and a computer forming part of the external computer network by means of sending a data connection request from the client computer to the relay using the first secure data transfer session; and establishing, by means of the first and second data connections, a second secure data transfer session between the client computer and the computer forming part of the external computer network.

The invention will now be described, by way of example, with reference to the accompanying drawings in which:
Figure 1 is a block diagram showing a corporate computer network connected to an Internet server;
Figure 2 illustrates the processes running on the computer network represented in Figure 1;
Figure 3 is a block diagram showing the corporate computer network of Figure 1 connected to a further corporate computer network; and
Figure 4 illustrates the processes running on the computer network shown in Figure 3.

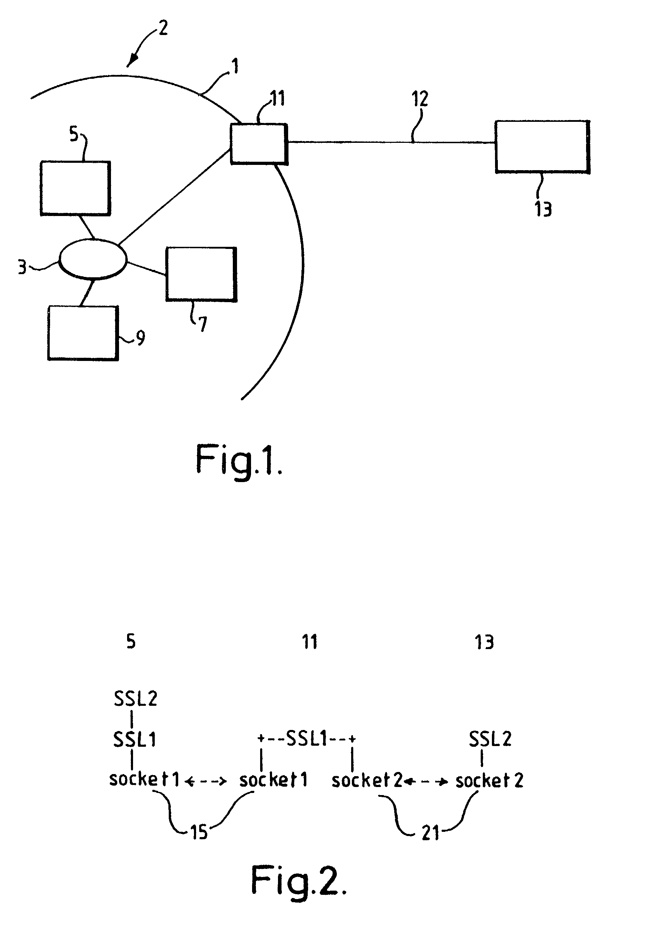

Referring to Figure 1, a corporate computer network 2 is shown. Figure 1 also shows an Internet server 13 connected to the corporate computer network 2 by means of a telephone line 12. The boundary of the corporate computer network 2 is represented by reference numeral 1. Within the corporate computer network 2 is a LAN 3 to which is connected first, second and third client computers 5, 7, and 9. At the boundary 1 of the corporate computer network 2 is a firewall computer 11 (hereinafter simply referred to as 'the firewall'). The firewall 11 is configured to prevent incoming data connections being made to the LAN 3 from outside of the corporate computer network 2. As well as preventing incoming communications with the LAN 3, the firewall 11 is also configured to control connections requested from within the corporate computer network 2 to external computers. Indeed, for security purposes, the firewall 11 is configured to require authentication of such requests for an external connection (i.e. to verify who is actually making the request) prior to establishing the external connection. This authentication is performed using the SSL protocol. In this case, the Java Secure Sockets Extension (JSSE) version of SSL is used. The fact that the firewall 11 requires authentication with SSL is pre-programmed with the first, second and third client computers 5, 7, 9.

The operation by which the firewall 11 allows a secure connection to be established is described with reference to Figure 2.

Referring to Figure 2, the various layered processes running on the overall system components of Figure 1 are shown. In use, a user of the first client computer 5 (to take this computer as an example) sends a request to the firewall 11, for accessing a particular web-site stored on the Internet server 13. An SSL session between the first client computer 5 and the Internet server 13 is desired. The firewall 11 establishes the connection known as 'socket1' (the two ends points of which are indicated by the reference numeral 15) between the first client computer 5 and itself. As mentioned previously, a 'socket' is the standard API method by which data is transferred on the transport layer of a computer network, e.g. using the Transport Control Protocol (TCP).

The first client computer 5 then establishes a first SSL session, called SSL1, over socket1 15.

In the next stage, the first client computer 5 sends its request to access the Internet server 13 by using SSL1. Thus, the firewall 11 is able to verify that client computer 5 sent the request message. Provided the address specified in the request does not correspond with a pre-stored list of forbidden sites in the firewall 11, the firewall then establishes a second connection, i.e. between itself and the Internet server 13. This second connection is known as 'socket2' (the two end points of which are indicated by the reference numeral 21). Once the firewall 11 has successfully set-up socket2 21, the first client computer 5 can now layer a second SSL session, called SSL2, partly using the first SSL session, SSL1, as its transport layer. This is to some extent facilitated by the use of JSSE which, unlike some other SSL implementations, has an abstract view of 'sockets'. Other implementations of SSL can also be used, such as OpenSSL. With JSSE, it is possible to open SSL sessions directly on the socket layer (as with all SSL implementations) and it is also possible to use such SSL sessions as transport layers themselves. Accordingly, in the above example, SSL2 is established between the first client computer 5 and the Internet server 13 using SSL1 as the transport layer. Data sent using SSL2 is effectively 'tunnelled' through the SSL1 session, although this tunnelling is transparent to the Internet server 13.

It will be appreciated that, initially, the firewall 11 does not require knowledge of the address of the Internet server 13. Once a secure connection is established between the client computer 5 and the firewall 11 (using SSL1) and the required authentication completed, the client computer 5 sends its request to access the Internet server 13 over the SSL1 connection. This request may include the address of the Internet server 13, and so, at this time, the firewall 11 can proceed to establish a connection with the Internet server 13. The second secure session (SSL2) between the client computer 5 and the Internet server 13 can then be layered over the first secure session (SSL1).

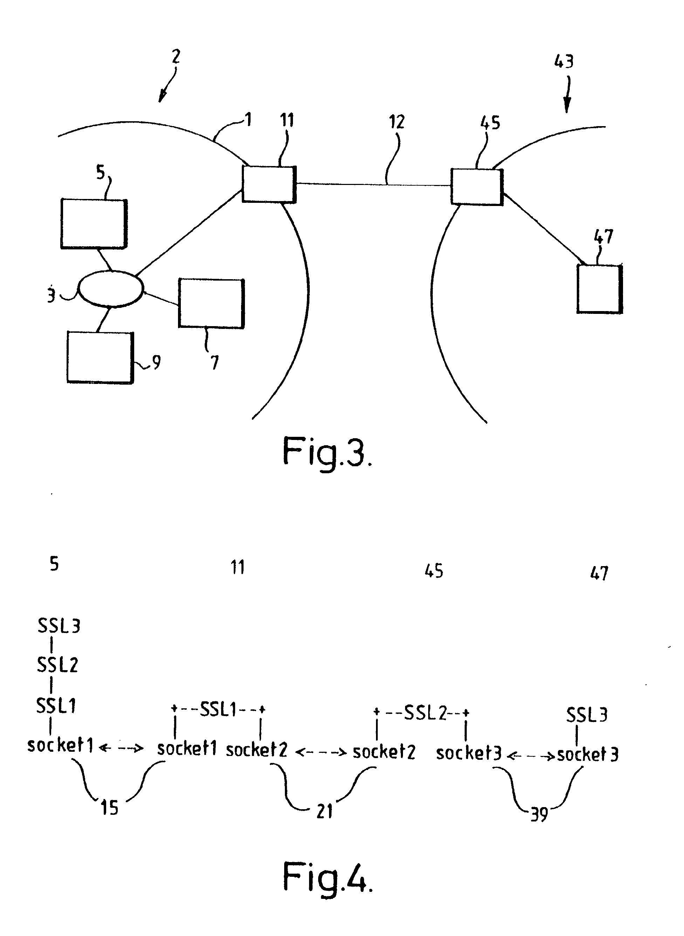

The principle of operation is readily applicable to situations where multiple firewalls are employed. A second embodiment is shown in Figure 3. Figure 3 is identical to Figure 1, with the exception that the destination computer 47 is not an Internet server but part of a different corporate network 43 having its own firewall 45 (hereinafter referred to as "the second firewall"). As with firewall 11, the second firewall 45 does not generally allow inbound access to the corporate network 43. However, the second firewall 45 does permit inbound access if an SSL session is set up, and data is sent using the SSL session.

The fact that the firewalls 11, 45 require authentication with SSL is pre-programmed with the first, second and third client computers 5, 7, 9. In other words, the client computers 5, 7, 9 can be programmed to know that two firewalls are being used and that they both require SSL session to be set up.

Referring to Figure 4, the various layered processes running on the system of Figure 3 are shown. The same initial process described above is performed i.e. with SSL1 and SSL2 being set up. In this case, however, a third connection, socket3 39, is established between a second firewall 37 and the destination computer 47. A third SSL session, SSL3, is invoked, which uses SSL2 as its transport layer (which in turn uses SSL1 as its transport layer). Thus, data sent using SSL3 is tunnelled through SSL2 and SSL1. As many SSL sessions as are required can be nested in this way in order to cater for any number of intervening devices which require secure data transfer (i.e. over a secure data transfer session).

By using this nesting method whereby a previous SSL session is used as the transport mechanism for transferring data using a new SSL session, no changes are generally required to the SSL implementation in the client computer or the destination computer. The method caters for situations where it would be advantageous to set up secure relays which only invoke on-bound connections which are first authenticated using a secure data transfer protocol.

## Claims

1. A method of establishing a secure data connection between a first computer (5) and a second computer (13) over a computer network, the computer network including a third computer (11) interconnecting the first and second computers, the method comprising: establishing a first data connection between the first computer and the third computer; establishing, over the first data connection, a first secure data transfer session between the first computer and the third computer; in response to a request sent over the first secure data transfer session, establishing a second data connection between the third computer and the second computer; and establishing, by means of the first and second data connections, a second secure data transfer session between the first computer and the second computer.

2. A method according to claim 1, wherein the third computer (11) is a relay, and wherein, after the first data connection is established, the relay computer sends a prompt message to the first computer (5) requesting that a secure data transfer session be established.

3. A method according to claim 2, wherein the step of establishing the second data connection between the relay (11) and the second computer (13) is performed by means of the first computer (5) sending a request message to the relay over the first secure data transfer session, the request message specifying the location or address of the second computer.

4. A method according to claim 2 or claim 3, wherein, prior to the step of establishing the second data connection between the relay (11) and the second computer (13), the relay performs a security check to determine whether the second computer can be accessed, the second data connection only being established if the check is successful.

5. A method according to any preceding claim, wherein the first and second secure data transfer sessions are established using the SSL protocol.

6. A method according to any preceding claim, wherein the second secure data transfer session between the first computer (5) and the second computer (13) is layered over the first secure data transfer session.

7. A method according to any preceding claim, wherein the second secure data transfer session between the first computer (5) and the second computer (13) uses the first secure data transfer session as its transport layer.

8. A method of establishing a secure data connection between a first computer (5) and a second computer (13) over a computer network, the computer network including a third computer (11), the method comprising: establishing a first data connection between the first computer and the third computer; establishing, over the first data connection, a first secure data transfer session between the first computer and the third computer; transferring an access request to the third computer over the first secure data transfer session, the access request including an address corresponding to the second computer; establishing a second data connection between the third computer and the second computer using the address supplied from the first computer; and establishing, by means of the first and second data connections, a second secure data transfer session between the first computer and the second computer.

9. A method of establishing a secure data connection between a first computer (5) and a second computer (13) over a computer network, the computer network including a third computer (11), wherein the second computer is accessible by means of an address which is initially unknown to the third computer, the method comprising: establishing a first data connection between the first computer and the third computer; establishing, over the first data connection, a first secure data transfer session between the first computer and the third computer; establishing a second data connection between the third computer and the second computer in response to receiving an access request from the first computer over the first secure data transfer session, the access request including the address of the second computer; and establishing, by means of the first and second data connections, a second secure data transfer session between the first computer and the second computer, the second secure data transfer session using the first secure data transfer session as its transport layer.

10. A method of establishing a secure data connection between a first computer (5) and a second computer (13) over a computer network, the computer network including a firewall (11), wherein the second computer is accessible by means of an address which is initially unknown to the firewall, the method comprising: establishing a first data connection between the first computer and the firewall; establishing, over the first data connection, a first secure data transfer session between the first computer and the firewall; establishing a second data connection between the firewall and the second computer in response to receiving an access request from the first computer over the first secure data transfer session, the access request including the address of the second computer; and establishing, by means of the first and second data connections, a second secure data transfer session between the first computer and the second computer.

11. A computer program stored on computer usable medium comprising computer-readable instructions for causing a host computer (5) to perform the steps of: establishing a first data connection between the host computer and a first remote computer (11); establishing, over the first data connection, a first secure data transfer session between the host computer and the first remote computer; in response to a request sent over the first secure data transfer session, causing the first remote computer to establish a second data connection between the first remote computer and a second remote computer (13); and establishing, by means of the first and second data connections, a second secure data transfer session between the host computer and the second remote computer.

12. A computer network comprising: at least one client computer (5, 7, 9); and a relay (11) for controlling data flow between the or each client computer and an external computer network (43), wherein the or each client computer is configured to: establish a first data connection with the relay; establish, over the first data connection, a first secure data transfer session between the client computer and the relay; establish a second data connection between the relay and a computer forming part of the external computer network by means of sending a data connection request from the client computer to the relay using the first secure data transfer session; and establishing, by means of the first and second data connections, a second secure data transfer session between the client computer and the computer forming part of the external computer network.
